## Europäisches Patentamt

## European Patent Office

## Office européen des brevets

(19)

(11) Numéro de publication: **0 061 362**
**B1**

(12) **FASCICULE DE BREVET EUROPEEN**

(45) Date de publication du fascicule du brevet:
**14.08.85**

(51) Int. Cl.⁴: **G 01 P 1/04, B 62 J 39/00**

(21) Numéro de dépôt: **82400218.2**

(22) Date de dépôt: **08.02.82**

(54) **Poulie d'entraînement, notamment pour compteur kilométrique de cycle ou motocycle.**

(30) Priorité: **23.03.81 FR 8105717**

(43) Date de publication de la demande:
**29.09.82 Bulletin 82/39**

(45) Mention de la délivrance du brevet:
**14.08.85 Bulletin 85/33**

(84) Etats contractants désignés:
**BE DE GB IT LU NL**

(56) Documents cités:
**CH - A - 106 916**
**FR - A - 591 340**
**FR - A - 873 893**
**FR - A - 2 426 906**
**US - A - 4 212 482**

(73) Titulaire: **HURET ET SES FILS Société dite:, 60 Avenue Félix Faure, F-92000 Nanterre (FR)**

(72) Inventeur: **Huret, Roger, Décédé (FR)**

(74) Mandataire: **Moncheny, Michel et al, c/o Cabinet Lavoix 2 Place d'Estienne d'Orves, F-75441 Paris Cedex 09 (FR)**

## Description

La présente invention a pour objet une poulie d'entraînement, notamment pour compteur kilométrique de cycle ou motocycle, destinée à être fixée en position adjacente à un flasque de moyeu de roue, coaxialement à ce moyeu, comportant un anneau à gorge à la périphérie duquel sont formés trois appendices ayant chacun une extrémité libre munie de moyens de mise en prise avec la roue.

Dans les poulies d'entraînement connues de ce type, qui sont en principe en matière plastique moulée, les trois appendices formés à la périphérie de l'anneau ont une orientation essentiellement axiale et les trois becs d'accrochage prévus à l'extrémité libre des appendices respectifs sont destinés à venir en prise avec le bord circulaire du flasque de moyeu correspondant, dont le diamètre doit en conséquence être le même que celui du cercle défini par les trois appendices axiaux. Lorsque les deux diamètres sont différents, le montage de la poulie ne peut être exécuté qu'en utilisant des expédients peu satisfaisants.

On a certes déjà proposé de réaliser des anneaux formant poulie munis de plusieurs groupes de trois appendices qui, dans chaque groupe, correspondent à un diamètre de flasque différent, les appendices autres que les trois appendices utiles étant alors supprimés au moment du montage, au moyen d'un outil coupant. Un tel agencement est décrit par FR-A-2 426 906. Cependant, outre qu'elle entraîne un gaspillage de matière, cette solution exige beaucoup d'attention de la part du monteur, qui risque de se tromper de façon irréparable dans le choix des appendices à conserver.

Le but de l'invention est de réaliser une poulie d'entraînement qui, tout en étant de fabrication relativement simple, permet une adaptation sûre à des diamètres de flasques différents.

L'invention a pour objet une poulie d'entraînement, notamment pour compteur kilométrique de cycle ou motocycle, destinée à être fixée en position adjacente à un flasque de moyeu d'une roue à rayons d'un cycle ou motocycle coaxialement à ce moyeu, ladite poulie comportant un anneau à gorge à la périphérie duquel sont formés trois appendices ayant chacun une extrémité libre munie de moyens de mise en prise avec ladite roue et constituant chacun un bras d'orientation essentiellement radiale, caractérisée en ce qu'un organe de montage susceptible d'être mis en prise avec un rayon de ladite roue est porté en position réglable à l'extrémité libre de chacun desdits bras.

Pour une fixation de la poulie sur une roue comportant un rayonnage normal, c'est-à-dire dans lequel chaque rayon croise trois autres rayons, il suffit, pour que le montage soit possible dans tous les cas, de prévoir à l'extrémité libre de chacun des bras radiaux une ouverture définissant au moins une position pour le logement d'un téton qui traverse l'ouverture et fait partie de l'organe de montage, qui est avantageusement constitué par une pince tournante entre les branches élastiques de laquelle peut être saisi un rayon de la roue.

Si la roue a un rayonnage autre que normal, une disposition un peu différente peut être adoptée, suivant laquelle, à l'extrémité libre du bras radial, est articulée autour d'un axe parallèle à l'axe de l'anneau l'une des extrémités d'une patte, à l'autre extrémité de laquelle est porté l'organe de montage, qui lui aussi paut être constitué par une pince tournante. A la pince tournante peut être préférée une solution plus économique consistant à prévoir à l'extrémité de la patte pivotante qui est opposée à l'axe d'articulation une protubérance axiale venue de moulage avec la patte elle-même, comportant à sa périphérie une fente dans laquelle peut être inséré un rayon de roue. La protubérance est avantageusement réalisée sous la forme d'un plot circulaire comportant une gorge périphérique.

L'invention sera explicitée de façon purement indicative au cours de la description qui va suivre, en référence au dessin annexé, dans lequel:

– la fig. 1 est une vue schématique en perspective d'un flasque de moyeu de roue de bicyclette à proximité duquel une poulie d'entraînement suivant l'invention est fixée, au moyen d'organes de montage en prise avec les rayons;

– la fig. 2 est une vue en perspective, à plus grande échelle, de la poulie;

– la fig. 3 est une vue d'une variante d'organe de montage;

– la fig. 4 est une vue en perspective d'un autre mode d'exécution de poulie, sans les organes de montage.

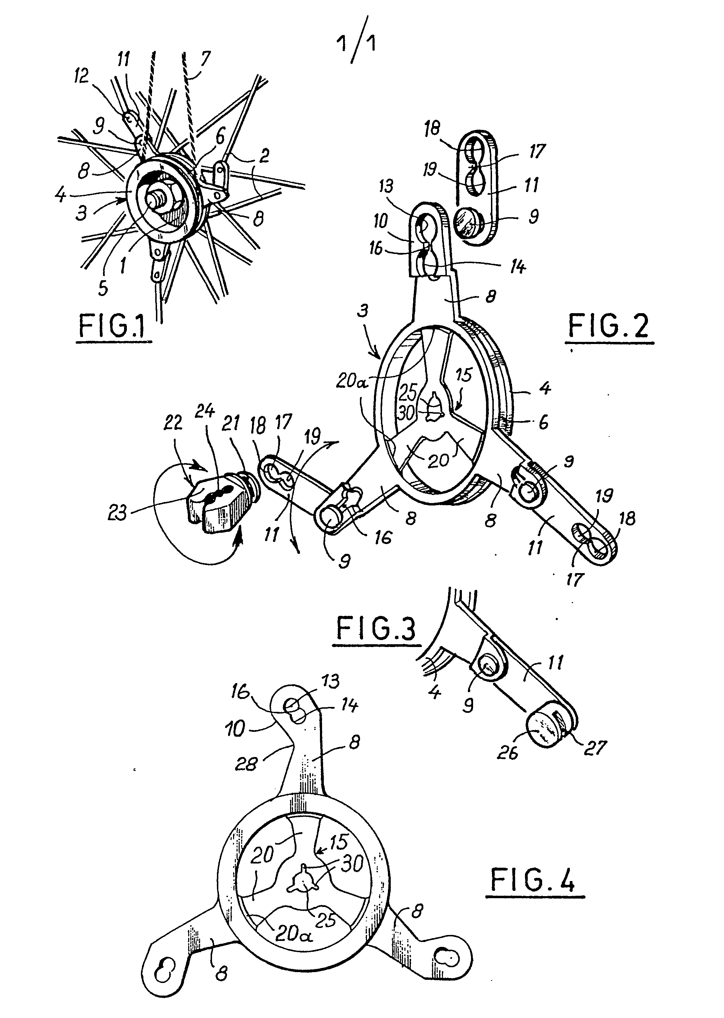

Sur la figure 1 est représenté un flasque 1, de contour circulaire, d'un moyeu non représenté entourant un axe 5, pour le montage d'une roue de bicyclette. A la périphérie du flasque est fixée, de façon classique, l'une des extrémités d'un certain nombre de rayons 2. En position adjacente à la face externe du flasque 1 est montée, concentriquement au flasque, une poulie 3 en matière plastique moulée comportant un anneau 4 sur une gorge 6 duquel passe une courroie 7 pour l'entraînement d'un compteur kilométrique, non représenté. Sur la périphérie de l'anneau 4, vers l'intérieur, sont formés trois bras 8, d'orientation générale radiale, espacés circonférentiellement de 120°, à l'extrémité libre 10 de chacun desquels est articulée, au moyen d'un axe 9, l'une des extrémités d'une patte 11 dont l'autre extrémité 12 est munie d'un organe de montage, non représenté à la figure 1, qui est adapté pour venir en prise avec un rayon 2, de manière à maintenir en position centrée la poulie 3.

Comme le montre la figure 2, l'axe 9 qui fait corps avec la patte 11 comporte une extrémité libre élargie qui peut être engagée dans un orifice circulaire 14 défini par une partie du contour interne d'une ouverture 16 formée à l'extrémité libre 10 du bras 8 correspondant. Le contour de l'ouverture 16 délimite également une autre partie circulaire, 13, de diamètre plus petit que celui de l'orifice 14, qui forme un logement dans lequel peut être retenu par son extrémité élargie l'axe 9, après franchissement, par déformation élastique, du passage étroit formé dans l'ouverture 16 entre les deux parties circulaires 13, 14. A l'extrémité opposée à l'axe 9 de chaque patte pivotante 11 est, de même, formée une ouverture 17 délimitant deux parties circulaires 19, 18 pour le montage, dans le logement 18, d'un téton 21 inséré au préalable dans lorifice plus grand 19, avec lequel fait corps une pince tournante 22 dont les deux branches 23 peuvent, en s'écartant élastiquement, saisir un rayon 2 en l'une ou l'autre de deux positions définies par un crantage 24 formé dans chacune des branches 23.

Les possibilités de réglage offertes par le pivotement de chaque patte 11, le montage tournant de chaque pince 22, et le crantage 24 permettent d'adapter la poulie suivant l'invention à un diamètre quelconque du flasque de moyeu 1 et à la géométrie correspondante du rayonnage de la roue dont les rayons 2 peuvent croiser chacun un nombre quelconque d'autres rayons.

Pour le centrage de la poulie 3 par rapport à l'axe 5 un voile 15 en forme de croisillon à trois branches 20 est venu de moulage avec le bord interne de l'ouverture interne de l'anneau 4. Dans sa partie centrale est ménagé un trou 25 dont le bord est conformé de manière à pouvoir se déformer pour permettre l'insertion dans ce trou de l'extrémité d'un axe 5 de diamètre variable, compris par exemple entre 8 et 10 mm. Dans l'exemple représenté, la déformabilité du bord du trou 25 est obtenue au moyen de découpes radiales 30. L'arc 20a de raccordement avec le bord de l'anneau 4 de chaque branche de croisillon 20 est réalisé comme zone de moindre résistance, ce qui permet, une fois le montage effectué, de supprimer facilement, au moyen d'un outil coupant, l'ensemble du voile intérieur 15.

Dans la variante de la figure 3, la pince 22 est remplacée par un plot circulaire 26 qui fait corps avec la platte 11 et comporte dans sa périphérie une fente ou gorge 27, située dans un plan parallèle à l'anneau 4, qui peut être mise en prise, par pivotement de la patte 11, avec un rayon 2.

L'exemple d'exécution de la figure 4 correspond au cas où la poulie d'entraînement doit être montée sur une roue comportant un rayonnage normal, c'est-à-dire dont chaque rayon croise seulement trois autres rayons. Dans cet exemple il n'y a pas de patte pivotante 11 et le téton 21 de chaque pince tournante 22 est monté dans le logement 13 de l'extrémité 10, coudée à angle obtus en 28, du bras radial 8 correspondant, après avoir été inséré dans l'orifice 14 de plus grand diamètre.

## Revendications

1. Poulie (3) d'entraînement, notamment pour compteur kilométrique de cycle ou motocycle, destinée à être fixée en position adjacente à un flasque (1) de moyeu d'une roue à rayons d'un cycle ou motocycle et coaxialement à ce moyeu, ladite poulie (3) comportant un anneau (4) à gorge (6) à la périphérie duquel sont formés trois appendices ayant chacun une extrémité libre (10) munie de moyens (11) de mise en prise avec ladite roue et constituant chacun un bras (8) d'orientation essentiellement radiale, caractérisée en ce qu'un organe de montage (22, 26) susceptible d'être mis en prise avec un rayon (2) de ladite roue est porté en position réglable à l'extrémité libre (10) de chacun desdits bras (8).

2. Poulie suivant la revendication 1, caractérisée en ce que l'extrémité libre (10) de chacun des bras (8) comporte une ouverture (16) définissant au moins un logement circulaire (13) pour un téton (21) qui traverse l'ouverture et fait partie de l'organe de montage (22).

3. Poulie suivant la revendication 1, caractérisée en ce qu'à l'extrémité libre (10) du bras (8) est articulée autour d'un axe (9) parallèle à l'axe de l'anneau (4) l'une des extrémités d'une patte (11), à l'autre extrémité de laquelle est porté l'organe de montage (22, 26).

4. Poulie suivant la revendication 3, caractérisée en ce que l'extrémité de la patte (11) qui est opposée à l'axe d'articulation (9) comporte une ouverture (17) définissant au moins un logement circulaire (18) pour un téton (21) qui traverse l'ouverture et fait partie de l'organe de montage (22).

5. Poulie suivant l'une des revendications 2 à 4, caractérisée en ce que le téton (21), ou l'axe d'articulation (9), a une extrémité élargie qui peut être insérée dans une partie circulaire (14 ou 19) de l'ouverture de réception correspondante de plus grand diamètre que celui du logement (13 ou 18.

6. Poulie suivant l'une des revendications 2 à 5, caractérisée en ce que l'organe de montage est une pince tournante (22) entre les branches élastiques (23) de laquelle un rayon de roue (2) peut être saisi.

7. Poulie suivant l'une des revendications 3 à 5, caractérisée en ce qu'à l'extrémité de la patte (11) qui est opposée à l'axe d'articulation (9) est fixée ou formée une protubérance axiale (26) dans une fente (27) de laquelle un rayon de roue (2) peut être inséré.

8. Poulie suivant la revendication 7, caractérisée en ce que la protubérance constitue un plot circulaire (26) comportant une gorge périphérique (27).

9. Poulie suivant l'une des revendications 1 à 8, caractérisée en ce que dans l'ouverture interne de l'anneau (4) est formé un voile de centrage (15) au centre duquel est ménagé un trou (25) dans lequel peut être insérée l'extrémité de l'axe (5) autour duquel est monté le moyeu de roue.

10. Poulie suivant la revendication 9, caractérisée en ce que le bord du trou est déformable pour lui permettre de recevoir une extrémité d'axe (5) de diamètre variable.

## Patentansprüche

1. Triebscheibe (3), insbesondere für einen Fahrrad- oder Moped-Kilometerzähler, die in der Nähe eines Nabenflansches (1) eines Speichenrads des Fahrrads oder Mopeds koaxial zu der Nabe befestigbar ist, und die einen mit einer Kehle (6) versehenen Ring (4) aufweist, an dessen Umfang drei Ansätze angeformt sind, deren freies Ende (10) jeweils mit Mitteln (11) zum Eingriff mit dem genannten Rad ausgestattet sind und die jeweils einen im wesentlichen radial ausgerichteten Arm (8) bilden, dadurch gekennzeichnet, dass jeder der genannten Arme (8) an seinem freien Ende (10) in verstellbarer Position ein Montageorgan (22, 26) trägt, das mit einer Speiche (2) des Rades in Eingriff bringbar ist.

2. Triebscheibe nach Anspruch 1, dadurch gekennzeichnet, dass an dem freien Ende (10) jedes der Arme (8) eine Öffnung (16) angebracht ist, die wenigstens einen kreisförmigen Sitz (13) für einen Zapfen (21) bildet, der diese Öffnung durchdringt und Bestandteil des Montageorgans ist.

3. Triebscheibe nach Anspruch 1, dadurch gekennzeichnet, dass an dem freien Ende (10) des Arms (8), um eine parallel zur Achse des Rings (4) verlaufende Achse (9) verschwenkbar, das eine Ende einer Klaue (11) angelenkt ist, deren anderes Ende das Montageorgan (22, 26) trägt.

4. Triebscheibe nach Anspruch 3, dadurch gekennzeichnet, dass das der Schwenkachse (9) entgegengesetzte Ende der Klaue (11) eine Öffnung (17) aufweist, die wenigstens einen kreisförmigen Sitz (18) für einen Zapfen (21) bildet, der die Öffnung durchdringt und Bestandteil des Montageorgans (22) ist.

5. Triebscheibe nach einem der Ansprüche 2 bis 4, dadurch gekennzeichnet, dass der Zapfen (21) oder die Schwenkachse (9) ein verbreitertes Ende besitzen, das in einen kreisförmigen Teil (14 oder 19) der entsprechenden Aufnahmeöffnung einsetzbar ist, wobei dieser kreisförmige Teil (14 oder 19) einen grösseren Durchmesser hat als die genannte Aufnahme (13 oder 18).

6. Triebscheibe nach einem der Ansprüche 2 bis 5, dadurch gekennzeichnet, dass das Montageorgan eine drehbare Klammer (22) ist, zwischen deren elastischen Schenkeln (23) eine Speiche (2) des Rades einklemmbar ist.

7. Triebscheibe nach einem der Ansprüche 3 bis 5, dadurch gekennzeichnet, dass an dem der Schwenkachse (9) entgegengesetzten Ende der Klaue (11) ein axialer Vorsprung (26) befestigt ist oder angeformt ist, der einen Schlitz (27) aufweist, in den eine Speiche (2) des Rades einsetzbar ist.

8. Triebscheibe nach Anspruch 7, dadurch gekennzeichnet, dass der Vorsprung ein runder Stift (26) ist, an dessen Peripherie eine Kehle (26) vorgesehen ist.

9. Triebscheibe nach einem der Ansprüche 1 bis 8, dadurch gekennzeichnet, dass in der inneren Öffnung des Rings (4) ein Zentrierelement (15) ausgebildet ist, in dessen Zentrum sich ein Loch (25) befindet, in welches das Ende der Achse (5) einsetzbar ist, um die die Radnabe montiert ist.

10. Triebscheibe nach Anspruch 9, dadurch gekennzeichnet, dass der Rand des Loches verformbar ist, so dass das Loch die Enden von Achsen (5) unterschiedlichen Durchmessers aufnehmen kann.

**Claims**

1. A drive pulley (3), in particular for a kilometre recorder for a cycle or motor cycle, adapted to be fixed in position adjacent to a flange (1) of a spoked wheel hub of a cycle or motor cycle and coaxially with said hub, said pulley (3) comprising a ring (4) having a groove (6) on the periphery of which are formed three lugs each having a free end (10) provided with means (11) for engagement with said wheel and each constituting an arm (8) having a generally radial orientation, characterised in that mounting means (22, 26) capable of being engaged with a spoke (2) of said wheel is carried in an adjustable position at the free end (10) of each of said arms (8).

2. A pulley according to claim 1, characterised in that the free end (10) of each of the arms (8) includes an opening (16) defining at least one circular aperture (13) for a stud (21) which extends through the opening at this part of the mounting means (22).

3. A pulley according to claim 1, characterised in that there is mounted at the free end (10) of the arm (8) to pivot about a pivot pin (9) parallel to the axis of the ring (4) one of the ends of a tab (11) at the other end of which the mounting means (22, 26) is carried.

4. A pulley according to claim 3, characterised in that the end of the tab (11) which is opposed to the pivot pin (9) includes an opening (17) defining at least one circular aperture (18) for a stud (21) which extends through the opening at this part of the mounting means (22).

5. A pulley according to one of the claims 2 to 4, characterised in that the stud (21), or the pivot pin (9), has en enlarged end which may be inserted in a circular part (14) or (19) of the corresponding receiving opening of larger diameter than that of the aperture (13) or (18).

6. A pulley according to one of the claims 2 to 5, characterised in that the mounting means is a rotatable clip (22) between the resilient branches (23) of which a wheel spoke (2) may be gripped.

7. A pulley according to one of the claims 3 to 5, characterised in that there is fixed or formed at the end of the tab (11) which is opposed to the pivot pin (9) an axial projection (26) in a slot (27) of which a wheel spoke (2) may be inserted.

8. A pulley according to claim 7, characterised in that the projection constitutes a circular stud (26) having a peripheral groove (27).

9. A pulley according to one of the claims 1 to 8, characterised in that there is formed in the inner opening of the ring (4) a centering web (15) at the centre of which is provided an aperture (25) in which there may be inserted the end of the spindle (5) on which the wheel hub ist rotatively mounted.

10. A pulley according to claim 9, characterised in that the edge of the opening is deformable so as to enable it to receive an end of a spindle (5) of variable diameter.

FIG.1

FIG.2

FIG.3

FIG.4